# EUROPÄISCHE PATENTANMELDUNG

(11) **EP 2 361 661 A1**
(43) Veröffentlichungstag der Anmeldung: **31.08.2011**
(21) Anmeldenummer: 11450025.9
(22) Anmeldetag: 22.02.2011
(51) Int. Cl.: B01D 21/00, B01D 21/34, B01D 17/04, E03F 5/04, E03F 5/16

(54) **Abscheider mit einem in einer Trennwand installierten Kreuzstrom-Lamellenpaket**

(30) Priorität: 22.02.2010 AT 2662010
(71) Anmelder: Tiba Austria GmbH, 8403 Lebring (AT)
(72) Erfinder: Ofner, Hubert Ing., 8413 Kleinfelting (AT)
(74) Vertreter: Gibler & Poth Patentanwälte OG

(57) **Zusammenfassung**

Bei einem Abscheider 1 zum Abscheiden von Feststoffen und/oder Leichtflüssigkeiten aus einem Flüssigkeitsgemisch, insbesondere einem Abwasser, wobei der Abscheider einen Grobabscheideraum 2 und einen von diesem durch eine Trennwand 3 getrennten Ablaufraum 4 aufweist, wobei in einem Übergangsbereich von dem Grobabscheideraum 2 in den Ablaufraum 4 ein Plattenabscheider 5 angeordnet ist, wobei der Plattenabscheider 5 eine Mehrzahl im Wesentlichen parallel zueinander angeordneter Abscheideplatten 50 aufweist, welche Abscheideplatten 50 gegenüber der Horizontalen und der Vertikalen geneigt angeordnet sind, wird zum zuverlässigen Abscheiden der Feststoffe als auch das Abscheiden der Leichtflüssigkeiten vorgeschlagen, dass der Plattenabscheider 5 derart in dem Abscheider 1 angeordnet ist, dass die Flüssigkeit den Plattenabscheider 5 vom Grobabscheideraum 2 in den Ablaufraum 4 im Wesentlichen horizontal durchströmt.

## Beschreibung

Die Erfindung betrifft einen Abscheider zum Abscheiden von Feststoffen und/oder Leichtflüssigkeiten aus einem Flüssigkeitsgemisch gemäß dem Oberbegriff des Patentanspruches 1.

Abgeschiedene Stoffe, also Feststoffe und/oder Leichtflüssigkeiten, werden im Abscheider gespeichert, wobei eine Trägerflüssigkeit des Flüssigkeitsgemischs den Abscheider über einen Ablauf des Abscheiders verlassen kann.

Das Flüssigkeitsgemisch liegt in der Regel als Gemisch unterschiedlicher, miteinander schwer mischbarer Flüssigkeiten und/oder als Suspension vor. Insbesondere kann die Flüssigkeit als Gemisch derartiger Flüssigkeiten und gleichzeitig Suspension vorliegen, etwa als Abwasser. Das Flüssigkeitsgemisch kann unterschiedliche Flüssigkeiten und unterschiedliche Feststoffe umfassen.

Wenn das Flüssigkeitsgemisch einen oder mehrere Feststoffe umfasst, ist vorgesehen, dass der eine Feststoff oder die mehreren Feststoffe vom Plattenabscheider derart abgeschieden werden, dass dieser/diese im Abscheider gesammelt wird/werden. Wenn dass Flüssigkeitsgemisch wenigstens zwei Flüssigkeiten unterschiedlicher Dichte umfasst, ist vorgesehen, dass eine Flüssigkeit oder mehrere Flüssigkeiten geringer Dichte vom Plattenabscheider derart abgeschieden werden, dass diese im Abscheider gesammelt wird/werden. Flüssigkeiten, welche vom Plattenabscheider in diesem Sinne abscheidbar sind, werden im Weiteren als Leichtflüssigkeiten bezeichnet. Insbesondere kann die Leichtflüssigkeit eine Flüssigkeit sein, welche eine geringer Dichte als Wasser hat, wie dies üblicherweise bei Ölen, beispielsweise Mineralölen und/oder Speiseölen, und Benzin der Fall ist.

Nachteilig bei herkömmlichen Abscheidern mit Plattenabscheidern ist, dass je nach Ausgestaltung der Abscheider entweder Feststoffe oder Leichtflüssigkeiten besonders gut abgeschieden werden. Derartige bekannte Abscheider sind zwar in der Lage sowohl Feststoffe als auch Leichtflüssigkeiten aus dem Flüssigkeitsgemisch auszuscheiden, wobei jedoch je nach konkreter Ausgestaltung des Abscheiders Feststoffe besser oder schlechter abgeschieden werden als Leichtflüssigkeiten. Ein Abscheiden sowohl von Feststoffen als auch von Leichtflüssigkeiten auf dem selben qualitativen bzw. quantitativen Niveau ist mit bekannten Abscheidern nicht möglich.

Aufgabe der Erfindung ist es daher einen Abscheider der eingangs genannten Art anzugeben, mit welchem die genannten Nachteile vermieden werden können und welcher sowohl das Abscheiden der Feststoffe als auch das Abscheiden der Leichtflüssigkeiten zuverlässig gewährleisten kann.

Erfindungsgemäß wird dies durch die Merkmale des Patentanspruches 1 erreicht.

Das im Wesentlichen horizontale Durchströmen des Plattenabscheiders ermöglicht, dass sich im Plattenabscheider die Leichtflüssigkeit nach oben hin vom Flüssigkeitsgemisch, insbesondere von der Trägerflüssigkeit des Flüssigkeitsgemischs, und der Feststoff nach unten hin vom Flüssigkeitsgemisch, insbesondere von der Trägerflüssigkeit des Flüssigkeitsgemischs, gleichermaßen abtrennt. Somit ist sowohl ein gutes Abscheiden der Leichtflüssigkeit als auch ein gutes Abscheiden des Feststoffes aus dem Flüssigkeitsgemisch gewährleistet.

Die Unteransprüche, welche ebenso wie der Patentanspruch 1 gleichzeitig einen Teil der Beschreibung bilden, betreffen weitere vorteilhafte Ausgestaltungen der Erfindung.

Die Erfindung wird unter Bezugnahme auf die beigeschlossenen Zeichnungen, in welchen lediglich bevorzugte Ausführungsformen beispielhaft dargestellt sind, näher beschrieben. Dabei zeigt:
Fig. 1 schematisch und geschnitten im Schnitt B-B den Abscheider einer bevorzugten ersten Ausführungsform in Seitenansicht;
Fig. 2 schematisch und geschnitten im Schnitt A-A den Abscheider nach Fig. 1 in Aufsicht;
Fig. 3 schematisch in Sichtrichtung der Durchflussrichtung den Plattenabscheider einer bevorzugten ersten Ausführungsform in dessen Einbaulauge;
Fig. 4 schematisch den Plattenabscheider nach Fig. 3 geschnitten im Schnitt C-C;
Fig. 5 schematisch in Aufsicht den Plattenabscheider nach Fig. 3; und
Fig. 6 schematisch im Schrägriss den Plattenabscheider nach Fig. 3, einen Teil der Trennwand des Abscheiders und schematisch die Wirkungsweise des Plattenabscheiders.

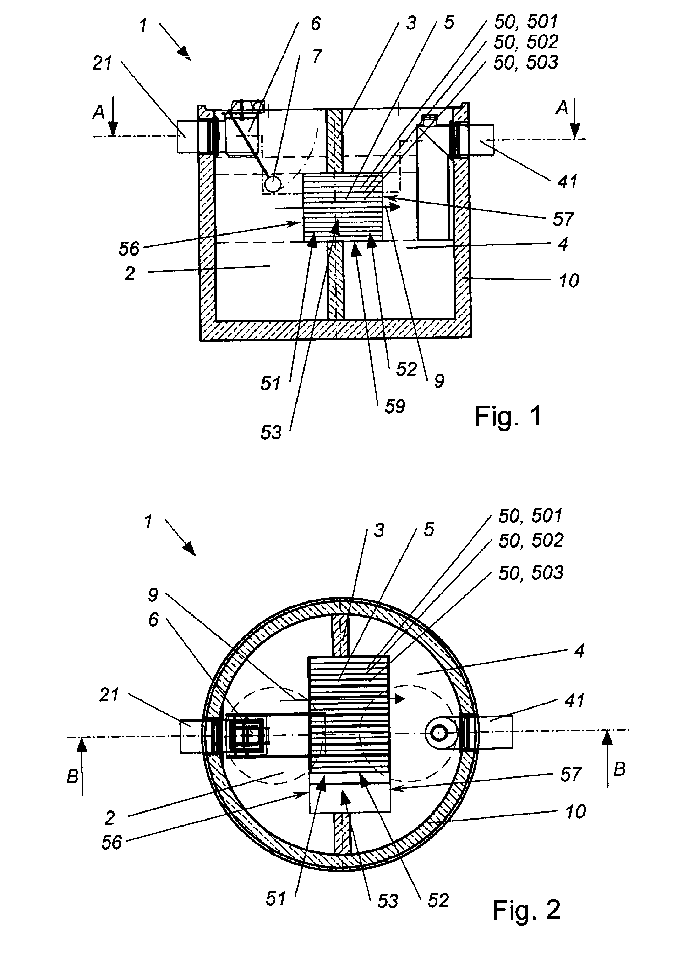

Die Fig. 1 und 2 zeigen einen Abscheider 1 zum Abscheiden von Feststoffen und/oder Leichtflüssigkeiten aus einem Flüssigkeitsgemisch, insbesondere einem Abwasser, wobei der Abscheider einen Grobabscheideraum 2 und einen von diesem durch eine Trennwand 3 getrennten Ablaufraum 4 aufweist, wobei in einem Übergangsbereich von dem Grobabscheideraum 2 in den Ablaufraum 4 ein Plattenabscheider 5 angeordnet ist, wobei der Plattenabscheider 5 eine Mehrzahl im Wesentlichen parallel zueinander angeordneter Abscheideplatten 50 aufweist, welche Abscheideplatten 50 gegenüber der Horizontalen und der Vertikalen geneigt angeordnet sind. Damit der Abscheider sowohl das Abscheiden der Feststoffe als auch das Abscheiden der Leichtflüssigkeiten zuverlässig gewährleisten kann wird vorgeschlagen, dass der Plattenabscheider 5 derart in dem Abscheider 1 angeordnet ist, dass die Flüssigkeit den Plattenabscheider 5 vom Grobabscheideraum 2 in den Ablaufraum 4 im Wesentlichen horizontal durchströmt.

Das im Wesentlichen horizontale Durchströmen des Plattenabscheiders 5 ermöglicht, dass sich im Plattenabscheider 5 eine Leichtflüssigkeit nach oben hin vom Flüssigkeitsgemisch abtrennt und der Feststoff nach unten hin vom Flüssigkeitsgemisch abtrennt. Somit sind ein gutes Abscheiden der Leichtflüssigkeit und ein gutes Abscheiden des Feststoffes aus dem Flüssigkeitsgemisch gewährleistet.

Das Flüssigkeitsgemisch liegt - wie eingangs bereits dargelegt - als Gemisch unterschiedlicher, miteinander schwer mischbarer Flüssigkeiten und/oder als Suspension vor. Insbesondere kann die Flüssigkeit als Gemisch derartiger Flüssigkeiten und gleichzeitig Suspension vorliegen, etwa als Abwasser. Das Flüssigkeitsgemisch kann unterschiedliche Flüssigkeiten, beispielsweise Wasser und Öl, und unterschiedliche Feststoffe, beispielsweise Schlammsedimente, Tone, Sande, Seifenrückstände, Späne, Metallspäne und/oder erhärtete Fette, umfassen. Die Flüssigkeiten im Flüssigkeitsgemisch können insbesondere unterschiedliche Dichten aufweisen, wobei das Flüssigkeitsgemisch wenigstens eine Leichtflüssigkeit und eine Trägerflüssigkeit umfasst, welche Trägerflüssigkeit schwerer als die Leichtflüssigkeit ist. Die Trägerflüssigkeit kann insbesondere Wasser sein. Insbesondere kann die Leichtflüssigkeit eine Flüssigkeit sein, welche eine geringer Dichte als Wasser hat, wie dies üblicherweise bei Öl, beispielsweise Mineralöl oder Speiseöl, oder Benzin der Fall ist. Üblicherweise besteht das Flüssigkeitsgemisch zu über 50% aus Trägerflüssigkeit und zu weniger als 50% aus Leichtflüssigkeiten und Feststoffen.

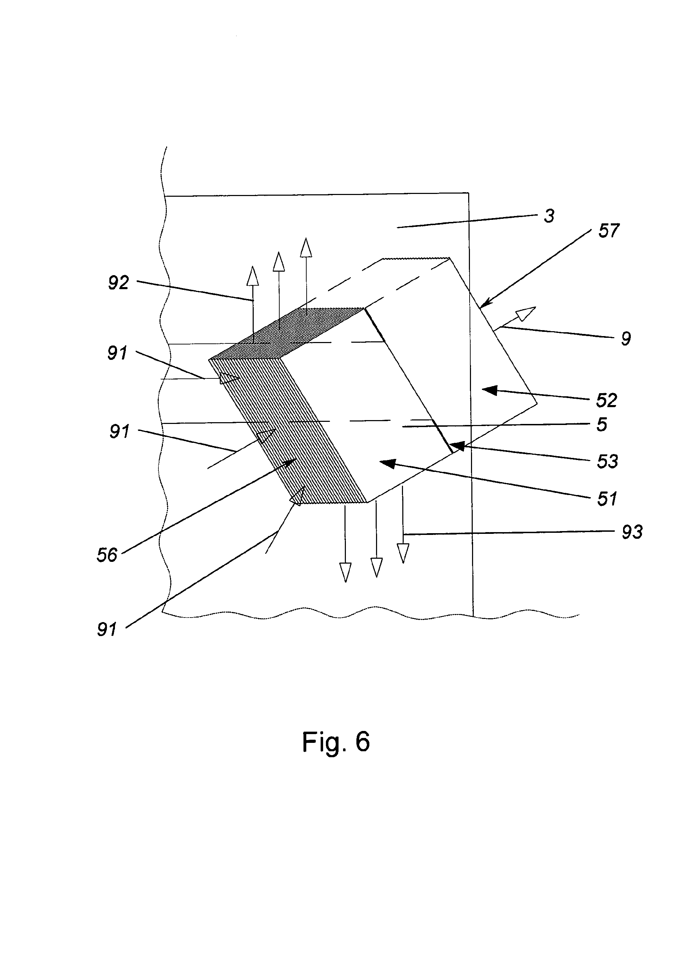

Der Plattenabscheider 5 ist zum Durchlassen der Trägerflüssigkeit, zum Abscheiden der Leichtflüssigkeit nach oben und zum Abscheiden der Feststoffe nach unten ausgebildet, wobei die Trägerflüssigkeit den Plattenabscheider 5 im Wesentlichen horizontal durchströmt, sodass der Plattenabscheider 5 im Wesentlichen horizontal durchströmt wird, wie dies schematisch in Fig. 6 dargestellt ist. Das Flüssigkeitsgemisch fließt in ersten Richtungen 91 zum Plattenabscheider 5 zu, durchfließt den Plattenabscheider 5 im Wesentlichen in Durchflussrichtung 9, welche im Wesentlichen horizontal angeordnet ist, die Leichtflüssigkeit wird in zweite Richtungen 92 nach oben hin abgeschieden und die Feststoffe werden in dritte Richtungen 93 nach unten hin abgeschieden.

Damit der Plattenabscheider 5 im Wesentlichen horizontal durchströmt wird, sind ein Flüssigkeitseintrittsbereich 56 des Plattenabscheiders 5 und ein Flüssigkeitsaustrittsbereich 57 des Plattenabscheiders 5 im Wesentlichen auf gleicher Höhe im Abscheider angeordnet, sodass das Flüssigkeitsgemisch im Wesentlichen auf gleicher Höhe aus dem Plattenabscheider 5 austritt, wie es in den Plattenabscheider 5 eintritt. Damit ist die im Wesentlichen horizontale Durchströmrichtung 9 des Plattenabscheiders 5 gegeben, wobei die Durchströmrichtung 9 des Plattenabscheiders 5 weniger als 10°, insbesondere weniger als 5°, bevorzugt weniger als 3°, zur Horizontalen geneigt ist. Derart kann besonders zuverlässig gewährleistet werden, dass Leichtflüssigkeiten nach oben und Feststoffe nach unten abgeschieden werden.

Insbesondere kann vorgesehen sein, dass die Flüssigkeit zwischen den Abscheideplatten 50 laminar fließt, welches die zuverlässige Abscheidewirkung von Leichtflüssigkeit und Feststoff gewährleisten kann.

Der in Fig. 1 und 2 schematisch dargestellte Abscheider der bevorzugten ersten Ausführungsform umfasst eine Umwandung 10, innerhalb welcher der Grobabscheideraum 2 und der Ablaufraum 4 angeordnet sind. Der Grobabscheideraum 2 und der Ablaufraum 4 bilden zwei mittels der Trennwand 3 voneinander getrennte und mittels des Plattenabscheiders 5 verbundene Becken, welche Becken zur Aufnahme des Flüssigkeitsgemisches ausgebildet sind. Aufgrund dessen, dass bevorzugt innerhalb des Grobabscheideraums 2 Feststoffe, insbesondere Sande und/oder Schlamm, und/oder Leichtflüssigkeiten, insbesondere Öle und/oder Fette, abgeschieden werden und mittels des Abscheidens im Grobabscheideraum 2 gespeichert werden, ist die Zusammensetzung des Flüssigkeitsgemisches im Grobabscheideraum 2 eine andere als im Ablaufraum 4. Diese Änderung der Zusammensetzung des Flüssigkeitsgemisches bewirkt der Plattenabscheider 5. In diesem Sinne kann das Flüssigkeitsgemisch im Grobabscheideraum 2 als erstes Flüssigkeitsgemisch und das Flüssigkeitsgemisch im Ablaufraum 4 als zweites Flüssigkeitsgemisch bezeichnet werden, wobei die Zusammensetzung des ersten Flüssigkeitsgemischs und des zweiten Flüssigkeitsgemischs unterschiedlich sind. Insbesondere kann gewährleistet sein, dass sich im Ablaufraum 4 im Wesentlichen lediglich Trägerflüssigkeit befindet oder dass der Anteil der Trägerflüssigkeit im zweiten Flüssigkeitsgemisch deutlich höher ist als im ersten Flüssigkeitsgemisch.

Im Betrieb des Abscheiders 1 flieβt das Im Betrieb des Abscheiders 1 fließt das Flüssigkeitsgemisch über einen Zulauf 21, an dessen Ende ein schwimmergesteuertes Ventil 6 angeordnet ist, in den Grobabscheideraum 2 hinein und lediglich über ein Durchfließen des Plattenabscheiders 5 in den Ablaufraum 4. Aus dem Ablaufraum 4 fließt das Flüssigkeitsgemisch über einen Ablauf 41 ab und/oder wird über den Ablauf 41 abgepumpt.

In Fig. 1 bis 3, 5 und 6 sind eine erste Abscheideplatte 501 der Abscheideplatten 50, eine zweite Abscheideplatte 502 der Abscheideplatten 50 und eine dritte Abscheideplatte 503 der Abscheideplatten 50 sowie weitere Abscheideplatten 50 dargestellt.

Die vom Abscheider 1 der ersten Ausfiihrungsform umfasste Trennwand 3 weist eine Öffnung auf. In der ersten Ausführungsform des Abscheiders 1 ist der Plattenabscheider 5 in dieser Öffnung angeordnet. Vorteilhaft dabei ist, dass der Plattenabscheider 5 derart im Zentrum des Abscheiders 1 angeordnet sein kann, welches ein laminares Durchströmen des Plattenabscheiders 5 begünstigt. Wie in Fig. 1 dargestellt ist die Durchströmrichtung 9 des Plattenabscheiders 5 dabei im Wesentlichen horizontal, wobei der Flüssigkeitseintrittsbereich 56 und der Flüssigkeitsaustrittsbereich 57 Plattenabscheiders 5 im Wesentlichen auf selber Höhe im Abscheider 1 angeordnet sind. Die Öffnung wird dabei insbesondere vollständig vom Plattenabscheider 5 ausgefüllt. In anderer Ausgestaltung des Abscheiders werden nicht ausgefüllte Bereiche der Öffnung abgedichtet, sodass das Flüssigkeitsgemisch lediglich über den Plattenabscheider 5 vom Grobabscheideraum 2 in den Ablaufraum 4 fließen kann. Insbesondere kann vorgesehen sein, dass ein erster Teil 51 einer jeden Abscheideplatte 50 in dem Grobabscheideraum 2 angeordnet ist, und dass ein zweiter Teil 52 einer jeden Abscheideplatte 50 in dem Ablaufraum 4 angeordnet ist. Derart sind die Abscheideplatten 50 in der ersten Ausführungsform des Abscheiders 1 angeordnet. In diesem Zusammenhang kann weiters vorgesehen sein, dass ein dritter Teil 53 einer jeden Abscheideplatte 50 in der Öffnung der Trennwand 3 angeordnet ist. Derart kann die einfache und zuverlässige lagefeste Anordnung des Plattenabscheiders 5 im Abscheider 1 gewährleistet sein.

In einer zweiten Ausführungsform des Abscheiders 1 kann vorgesehen sein, dass der Plattenabscheider 5 lediglich derart vor der Öffnung in der Trennwand 3 angeordnet ist, dass der Plattenabscheider 5 lediglich im Grobabscheideraum 2 angeordnet ist aber das Flüssigkeitsgemisch dennoch lediglich über ein Durchfließen durch den Plattenabscheider 5 in den Ablaufraum 4 gelangen kann. Dies kann mittels Abdichtungen und/oder Verrohrungen im Abscheider 1 realisiert werden. In einer dritten Ausführungsform des Abscheiders 1 kann vorgesehen sein, dass der Plattenabscheider 5 derart der Öffnung in der Trennwand 3 angeordnet ist, dass der Plattenabscheider 5 bereichsweise im Grobabscheideraum 2 angeordnet ist und der Ablaufraum 4 frei vom Plattenabscheider 5 ist, also der Plattenabscheider 5 nicht in den Ablaufraum 4 hineinragt. In der zweiten und in der dritten Ausführungsform des Abscheiders 1 kann der Ablaufraum 4 besonders kleinvolumig ausgebildet sein.

Insbesondere kann vorgesehen sein, dass die Abscheideplatten 50 einen rechteckigen Querschnitt aufweisen, und dass die unteren Kanten 59 und die oberen Kanten 58 der Abscheideplatten 50 im Wesentlichen horizontal angeordnet sind, wie dies bei der bevorzugten ersten Ausführungsform des Plattenabscheiders 5 der Fall ist, welche erste Ausführungsform des Plattenabscheiders 5 in den Fig. 1 bis 6 schematisch dargestellt ist. Beim rechteckigen Querschnitt ergibt sich, dass der Flüssigkeitseintrittsbereich 56 und der Flüssigkeitsaustrittsbereich 57 im Wesentlichen parallel zur vertikalen Ebene sind und dass obere Kanten 58 der Abscheideplatten 50 sowie unterer Kanten der Abscheideplatten 50 im Wesentlichen horizontal sind. Der rechteckige Querschnitt der Abscheideplatten 50 bewirkt, dass die hydraulischen Druckverluste des Plattenabscheiders 5 entlang der Durchflussrichtung 9 im oberen Bereich des Plattenabscheiders 5 und im unteren Bereich des Plattenabscheiders 5 im Wesentlichen gleich groß sein können, sodass die zur Durchflussrichtung 9 normale stehende wirksame Querschnittsfläche Plattenabscheiders 5 besonders gleichmäßig ausgenutzt werden kann und ein hoher Durchsatz durch den Plattenabscheider 5 bei einer hohen Abscheideleistung gewährleistet werden kann.

Insbesondere können die Abscheideplatten 50 zwischen 30cm und 120cm breit, zwischen 30cm und 120cm hoch und zwischen 0,05cm und 2cm dick ausgebildet sein. Insbesondere kann der Abstand zwischen zwei benachbarten Platten zwischen 0,2cm und 5cm betragen. Die Abscheideplatten 50 können Metall und/oder Kunststoff umfassen. Insbesondere eignet sich Nichtroststahl, Bronze und/oder PVC als Plattenwerkstoff für die Abscheideplatten 50. Die Abscheideleistung des Plattenabscheiders 5 kann weiter verbessert werden, wenn die Abscheideplatten 50 - in Einbaulage des Plattenabscheiders 5 im Abscheider 1 - in einem vorgebbaren Winkel zwischen 10° und 80°, insbesondere zwischen 25° und 75°, bevorzugt zischen 45° und 65°, geneigt zur Horizontalen angeordnet sind. Gemäß der ersten Ausführungsform des Abscheiders sind die Abscheideplatten 50 in etwa 60°, also 60° plus/minus 10°, geneigt zur Horizontalen angeordnet. Vorteilhaft dabei ist, dass die Durchflussrichtung 9 des Flüssigkeitsgemisches durch den Plattenabscheider 5 weiterhin im Wesentlichen horizontal ist, womit weiterhin die zuverlässige Abscheidung sowohl von Leichtflüssigkeiten als auch von Feststoffen aus dem Flüssigkeitsgemisch gewährleistet werden kann.

Die Abscheideleistung des Plattenabscheiders 5 kann insbesondere in Masseeinheit, insbesondere kg, abgeschiedener Feststoffe und/oder Leichtflüssigkeiten je Zeiteinheit, insbesondere h, gemessen werden.

Insbesondere kann vorgesehen sein, dass sämtliche Abscheideplatten 50 dieselbe Dimension aufweisen, womit die Herstellkosten der Abscheideplatten 50 gering sind.

In Weiterbildung des Plattenabscheiders 5 kann vorgesehen sein, dass der erste Teil 51 der ersten Abscheideplatte 501 dieselben Dimensionen aufweist wie der erste Teil 51 der zweiten Abscheideplatte 502. Vorteilhaft dabei ist, dass die Abscheideplatten 50 sämtlich im Wesentlichen gleich und somit besonders günstig herstellbar sind und eine gleichmäßige Abscheidungsleistung des Plattenabscheiders 5 gewährleistet werden kann.

Insbesondere kann vorgesehen sein, dass der erste Teil 51 sämtlicher Abscheideplatten 50 des Plattenabscheiders 5 eine ein und dieselbe erste Dimension aufweist und dass der zweite Teil 52 sämtlicher Abscheideplatten 50 des Plattenabscheiders 5 eine ein und dieselbe zweite Dimension aufweist. Dabei kann vorgesehen sein, dass der Flüssigkeitseintrittsbereich 56 und der Flüssigkeitsaustrittsbereich 57 des Plattenabscheiders 5 im Wesentlichen parallel zur Seitenfläche der Trennwand 3 angeordnet sind, welches bei der ersten Ausfiihrungsform des Abscheiders 1 ausgebildet ist.

Insbesondere kann vorgesehen sein, dass der erste, der zweite und der dritte Teil 51, 52, 53 sämtlicher Abscheideplatten 50 des Plattenabscheiders 5 eine erste Dimension, eine zweite Dimension und eine dritte Dimension haben.

In einer vierten Ausführungsform des Abscheiders 1 kann vorgesehen sein, dass sich eine im Abscheider 1 angeordnete Öffnung des Ablaufs 41 auf Höhe des Plattenabscheiders 5 befindet. Dabei liegt die Öffnung des Ablaufs 41 tiefer als die oberen Kanten 58 und höher als die unteren Kanten 59 der Abscheideplatten 50. Derart kann zuverlässig verhindert werden, dass Leichtflüssigkeiten und/oder Feststoffe in den Ablauf 41 gelangen.

Insbesondere kann vorgesehen sein, dass eine im Abscheider 1 angeordnete Öffnung des Ablaufs 41 im Wesentlichen auf selber Höhe wie die unteren Kanten 59 der Abscheideplatten 50 befindet, welches bei der ersten Ausfiihrungsform des Abscheiders 1 ausgebildet ist. Derart kann besonders zuverlässig verhindert werden, dass Leichtflüssigkeiten in den Ablauf 41 gelangen.

In besonders vorteilhafter Weiterbildung kann vorgesehen sein, dass Abstandhalter 55 zwischen jeweils zwei benachbarten Abscheideplatten 50 angeordnet sind. Die Abstandhalter 55 gewährleisten den konstanten Abstand jeweils zweier benachbarter Abscheideplatten 50 zueinander, also den konstanten Abstand zwischen der ersten Abscheideplatte 501 und der zweiten Abscheideplatte 502 sowie den konstanten Abstand zwischen der zweiten Abscheideplatte 502 und der dritten Abscheideplatte 503. Insbesondere kann vorgesehen sein, dass der Abstand zwischen jeweils zwei Platten im Wesentlichen gleich groß ist, also dass der zwischen der zweiten Abscheideplatte 502 und der dritten Abscheideplatte 503 gleich dem Abstand zwischen der ersten Abscheideplatte 501 und der zweiten Abscheideplatte 502 ist. Dieser jeweils gleiche Abstand zwischen zwei benachbarten Abscheideplatten 50 ist bei der ersten Ausführungsform des Plattenabscheiders 5 vorgesehen.

Insbesondere kann vorgesehen sein, dass - in Sichtrichtung der Durchflussrichtung 9 - mehrere Abstandhalter 55 hintereinander angeordnet sind. Dies kann vor allem bei großen Abscheideplatten 50 zweckmäßig sein um ein Variieren des Abstandes zwischen zwei Abscheideplatten 50 entlang der Durchflussrichtung 9 zu vermeiden.

In Ausbildung einer zweiten Ausführungsform des Plattenabscheiders 5 kann vorgesehen sein, dass keine Abstandhalter 55 vorgesehen sind, wobei die Abscheideplatten 50 an deren Kanten, insbesondere im dritten Teil 53 der Abscheideplatten 50, lagefest gehalten werden können. Dabei können Turbulenzen im Flüssigkeitsgemisch beim Durchströmen des Plattenabscheiders 5 besonders zuverlässig vermieden werden.

Bei der ersten Ausführungsform des Plattenabscheiders 5 ist weiters vorgesehen, dass entlang der Durchflussrichtung 9 mehrere die Abstandhalter 55 angeordnet sind. Derart kann besonders zuverlässig gewährleistet werden, dass benachbarte Abscheideplatten 50 einen konstanten Abstand zueinander aufweisen, wobei sich gezeigt hat, dass dies die Abscheideleistung des Plattenabscheiders 5 im Wesentlichen nicht verringert.

In diesem Zusammenhang kann vorgesehen sein, dass die Abstandhalter 55 derart entlang der Durchflussrichtung 9 angeordnet sind, dass das Flüssigkeitsgemisch den Plattenabscheider 5 - entlang der Durchflussrichtung 9 gesehen - derart wellenförmig durchströmt, dass ein Teil des Flüssigkeitsgemischs innerhalb des Plattenabscheiders 5 lokal nach oben und/oder nach unten abgelenkt, wobei das Flüssigkeitsgemisch vor und nach der lokalen Ablenkung im Wesentlichen entlang der Durchflussrichtung 9 fließt. Lokal kann dies die Abscheidung von Leichtflüssigkeiten und/oder von Feststoffen verbessern, womit die Abscheideleistung des Plattenabscheiders 5 verbessert werden kann. Insbesondere kann diese lokale Ablenkung einige Grad oder einige Zentimeter, beispielsweise 3cm bis 6cm, betragen.

Insbesondere kann vorgesehen sein, dass, wenn ein Teil des Flüssigkeitsgemischs im Plattenabscheider 5 lokal in eine erste Richtung nach oben oder nach unten abgelenkt wurde, dieser Teil des Flüssigkeitsgemischs im Plattenabscheider 5 beim weiteren Durchfließen durch den Plattenabscheider 5 nochmalig in die Gegenrichtung zur ersten Richtung abgelenkt wird, sodass der Teil des Flüssigkeitsgemischs im Wesentlichen auf gleicher Höhe aus dem Plattenabscheider 5 austritt, an der es in den Plattenabscheider 5 eingetreten ist. Insbesondere kann diese nochmalige lokale Ablenkung in die Gegenrichtung ebenfalls einige Grad oder einige Zentimeter, beispielsweise 3cm bis 6cm, betragen.

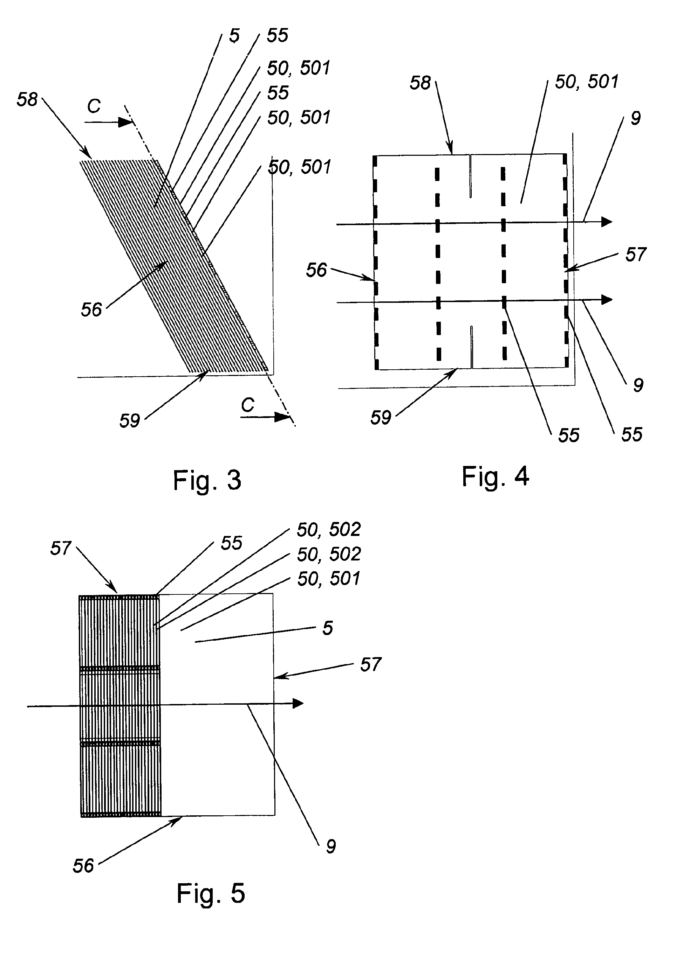

Zur Ausbildung der lokalen Ablenkung und/oder der nochmaligen lokalen Ablenkung des Teils des Flüssigkeitsgemischs im Plattenabscheider 5 können die Abstandhalter 55 - in Sichtrichtung der Durchflussrichtung 9 - hintereinander und versetzt angeordnet sein, wie dies in Fig. 4 schematisch dargestellt ist, welcher den Schnitt C-C durch die bevorzugte erste Ausführungsform des Plattenabscheiders 5 zeigt.

Zur Steigerung des Durchsatzes können im Abscheider 1 wenigstens zwei Plattenabscheider 5 in Parallelschaltung, insbesondere auf gleicher Höhe nebeneinander, angeordnet werden, wobei mit steigender Anzahl an Plattenabscheidern 5 der maximal mögliche Durchsatz des Abscheiders 1 proportional steigt. Die wenigstens zwei Plattenabscheider 5 können einander kontaktieren, beispielsweise in einer Öffnung der Trennwand 3 angeordnet sein, oder beabstandet zueinander angeordnet sein. In einer fünften Ausführungsform des Abscheiders kann beispielsweise vorgesehen sein, dass jeder der wenigstens zwei Plattenabscheider 5 jeweils eine eigene Öffnungen in der Trennwand 3 zugeordnet ist, wobei die Anzahl an Plattenabscheidern 5 mit der Anzahl an Öffnungen in der Trennwand 3 korrespondiert, und wobei die mehreren Öffnungen in der Trennwand 3 beabstandet voneinander angeordnet sind.

Weitere erfindungsgemäße Ausführungsformen weisen lediglich einen Teil der beschriebenen Merkmale auf, wobei jede Merkmalskombination, insbesondere auch von verschiedenen beschriebenen Ausführungsformen, vorgesehen sein kann.

## Patentansprüche

1. Abscheider (1) zum Abscheiden von Feststoffen und/oder Leichtflüssigkeiten aus einem Flüssigkeitsgemisch, insbesondere einem Abwasser, wobei der Abscheider einen Grobabscheideraum (2) und einen von diesem durch eine Trennwand (3) getrennten Ablaufraum (4) aufweist, wobei in einem Übergangsbereich von dem Grobabscheideraum (2) in den Ablaufraum (4) ein Plattenabscheider (5) angeordnet ist, wobei der Plattenabscheider (5) eine Mehrzahl im Wesentlichen parallel zueinander angeordneter Abscheideplatten (50) aufweist, welche Abscheideplatten (50) gegenüber der Horizontalen und der Vertikalen geneigt angeordnet sind, **dadurch gekennzeichnet, dass** der Plattenabscheider (5) derart in dem Abscheider (1) angeordnet ist, dass die Flüssigkeit den Plattenabscheider (5) vom Grobabscheideraum (2) in den Ablaufraum (4) im Wesentlichen horizontal durchströmt.

2. Abscheider nach Anspruch 1, **dadurch gekennzeichnet, dass** der Plattenabscheider (5) in einer Öffnung der Trennwand (3) angeordnet ist.

3. Abscheider nach Anspruch 1 oder 2, **dadurch gekennzeichnet, dass** die Abscheideplatten (50) einen rechteckigen Querschnitt aufweisen, und dass die unteren Kanten (59) und die oberen Kanten (58) der Abscheideplatten (50) im Wesentlichen horizontal angeordnet sind.

4. Abscheider nach Anspruch 1, 2 oder 3, **dadurch gekennzeichnet, dass** die Abscheideplatten (50) in einem vorgebbaren Winkel zwischen 10° und 80° geneigt zur Horizontalen angeordnet sind.

5. Abscheider nach einem der Ansprüche 1 bis 4, **dadurch gekennzeichnet, dass** ein erster Teil (51) einer jeden Abscheideplatte (50) in dem Grobabscheideraum (2) angeordnet ist, und dass ein zweiter Teil (52) einer jeden Abscheideplatte (50) in dem Ablaufraum (4) angeordnet ist.

6. Abscheider nach einem der Ansprüche 2 bis 5, **dadurch gekennzeichnet, dass** ein dritter Teil (53) einer jeden Abscheideplatte (50) in der Öffnung der Trennwand (3) angeordnet ist.

7. Abscheider nach Anspruch 5, **dadurch gekennzeichnet, dass** der erste Teil (51) einer ersten Abscheideplatte (501) dieselben Dimensionen aufweist wie der erste Teil (51) einer zweiten Abscheideplatte (502).

8. Abscheider nach einem der Ansprüche 1 bis 8, **dadurch gekennzeichnet, dass** Abstandhalter (55) zwischen jeweils zwei benachbarten Abscheideplatten (51) angeordnet sind.

9. Abscheider nach Anspruch 9, **dadurch gekennzeichnet, dass** entlang der Durchflussrichtung (9) mehrere die Abstandhalter (55) angeordnet sind.

10. Abscheider nach Anspruch 10, **dadurch gekennzeichnet, dass** - in Sichtrichtung der Durchflussrichtung (9) - mehrere Abstandhalter (55) hintereinander angeordnet sind.
